# EUROPEAN PATENT APPLICATION

(11) **EP 4 079 947 A1**
(43) Date of publication of application: **26.10.2022**
(21) Application number: 20903687.0
(22) Date of filing: 17.12.2020
(51) Int. Cl.: D01F 4/00, B60C 9/00, C08J 5/06, D02G 3/48, D06M 15/41, D06M 15/693

(54) **FIBERS FOR RUBBER REINFORCEMENT, RUBBER ARTICLE, CORD FOR TIRES, AND TIRE**

(30) Priority: 19.12.2019 JP 2019229779
(71) Applicant: BRIDGESTONE CORPORATION, Chuo-ku Tokyo 104-8340 (JP); Spiber Inc., Tsuruoka-shi, Yamagata 997-0052 (JP)
(72) Inventor: NAKAMURA, Masaaki, Tokyo 104-8340 (JP)
(74) Representative: Marks & Clerk LLP
(86) International application number: PCT/JP2020/047291
(87) International publication number: WO 2021/125298

(57) **Abstract**

Provided is a fiber for rubber reinforcement that can be produced using a bio-derived raw material and hardly breaks even when compounded with a rubber material. A first fiber for rubber reinforcement uses a protein fiber containing a hydrophobic protein. A second fiber for rubber reinforcement uses a protein fiber having an initial tensile modulus of elasticity of 2.0 GPa or more when wet. These fibers for rubber reinforcement preferably have a coating layer made of a water-based adhesive composition on the surface thereof.

## Description

### TECHNICAL FIELD

This disclosure relates to a fiber for rubber reinforcement, a rubber article, a cord for tires, and a tire.

### BACKGROUND

Synthetic fibers such as nylon, polyester, and vinylon made from fossil resources such as petroleum have been conventionally and widely used as materials for fibers for reinforcing rubber articles such as tires (fibers for rubber reinforcement). However, it has been desired to reduce the use of the above-described synthetic fibers made from fossil resources, considering the problems of stable supply of fossil resources and soaring prices in the future.

Examples of fiber materials made from materials other than fossil resources include rayon fiber made from wood. However, replacing most of the synthetic fibers currently used with fibers made from wood may deplete the forest resources and destroy the environment. Therefore, there is a strong demand for the supply of a sustainable and ethical material that is naturally derived and does not cause environmental problems.

As a measure to meet such a demand, a technique of protein fiber obtained by spinning has been developed, where a structural protein produced in a fermentation process using microorganisms is used as a raw material. More specifically, this protein fiber is obtained by, for example, as described in WO/2017/188434 (PTL 1), molecularly designing a protein amino acid sequence that provides various properties as a fiber and a gene sequence that produces the protein molecules, synthesizing a gene, purifying a structural protein produced by fermentation of microorganisms incorporating the gene, and spinning the structural protein as a raw material. Further, bases are being constructed to mass-produce the structural protein with this technique.

The production of such a bio-derived raw material using fermentation of microorganisms utilizes grains or non-edible parts or the like as biomass resources, which will not deplete the forest resources. Further, it can also lead to an increase in carbon savings because the expansion of farmland for crop rotation. Therefore, the above-described production can ethically provide fibers that contribute to a sustainable future society.

JP2017121843A (PTL 2) describes spinning a polypeptide produced using a host transformed with a gene encoding a polypeptide derived from a natural spider silk protein, and using the obtained fibroin fiber in a fiber cord for reinforcing pneumatic tires. PTL 2 describes that a predetermined tire member is formed by topping the reinforcing fiber cord with a rubber composition for cord topping. Further, PTL 2 describes that the rubber composition for cord topping preferably contains 3 parts by mass or more of sulfur with respect to 100 parts by mass of rubber components.

However, some protein fibers shrink due to contact with water. Further, depending on the type of protein fiber or the method of production, some fibers may elongate when they come into contact with water. In this regard, it has been reported that natural spider silk has the property of increasing its rubbery elasticity when swollen with water (M. Gosline, M.W. Denny and M. E. DeMont, Nature, 309, 551 (1984) (NPL 1)), for example. When such unexpected length changes such as shrinkage and elongation due to contact of protein fibers with water occur during production processes or in products, it may cause various problems.

For example, when producing a fiber for rubber reinforcement used in a tire or the like, there may be a process in which a fiber before being topped with a sulfur-containing rubber composition (compounded with a rubber material) is coated with a water-based adhesive composition by dipping or coating or the like, and then the moisture of the adhesive composition is dried by heating and adhesion treatment is performed. At this time, if there is an unexpected change in fiber length due to the type of protein fiber or the method of production (moisture content or temperature difference) as described above, the operability and the cord quality may deteriorate.

It is required that an adhesive composition used for coating fibers in tires and the like should maintain, in addition to initial adhesiveness, adhesion even under strain and heat input caused by various impacts (such as rolling of the tire). Examples of the adhesive composition include the RFL (resorcin-formaldehyde-latex) adhesive composition obtained by aging a mixed solution containing resorcin, formaldehyde and a rubber latex as described in US2128229A (PTL 3) and JP2005263887A (PTL 4).

Further, to meet the recent demands for reducing the use of resorcin to lower the burden on the environment, WO/2010/125992 (PTL 5), for example, describes a resorcin-free adhesive composition containing a rubber latex, a blocked isocyanate compound, an epoxy compound, an amino-based compound as a curing agent, and the like.

### CITATION LIST

### Patent Literature

PTL 1: WO/2017/188434
PTL 2: JP2017121843A
PTL 3: US2128229A
PTL 4: JP2005263887A
PTL 5: WO/2010/125992

### Non-patent Literature

NPL 1: J. M. Gosline, M.W. Denny and M. E. DeMont, Nature, 309, 551 (1984)

### SUMMARY

### (Technical Problem)

The fibroin fiber described in PTL 2 tends to break when compounded with a rubber material, especially when wet. Further, the fibroin fiber may not exhibit sufficiently high strength, especially when a rubber article is used in a harsh environment. Therefore, there is room for improvement in using the fiber as a reinforcing fiber in rubber articles such as tires.

The performance of tires has been improved and the weight of tires has been reduced for energy saving in recent years, so that distortion and heat input to a cord caused by tire rotation are becoming more and more severe. Sufficient knowledge has not been obtained regarding fiber materials that can be suitably coated with a water-based adhesive composition by dipping or coating and methods thereof to industrially provide protein fibers that ensure the cord quality of fibers for rubber reinforcement used in tires.

It could thus be helpful to provide a fiber for rubber reinforcement that can be produced using a bio-derived raw material and hardly breaks even when compounded with a rubber material. It is also helpful to provide a rubber article, a cord for tires and a tire with high strength using the fiber for rubber reinforcement.

### (Solution to Problem)

We thus provide the following.

That is, a first fiber for rubber reinforcement of the present disclosure uses a protein fiber containing a hydrophobic protein.

A second fiber for rubber reinforcement of the present disclosure uses a protein fiber having an initial tensile modulus of elasticity of 2.0 GPa or more when wet.

A rubber article of the present disclosure comprises the fiber for rubber reinforcement.

A cord for tires of the present disclosure comprises the fiber for rubber reinforcement.

A tire of the present disclosure comprises the cord for tires.

### (Advantageous Effect)

According to the present disclosure, it is possible to provide a fiber for rubber reinforcement that can be produced using a bio-derived raw material and hardly breaks even when compounded with a rubber material. Further, according to the present disclosure, it is possible to provide a rubber article, a cord for tires, and a tire with high strength using the fiber for rubber reinforcement.

### BRIEF DESCRIPTION OF THE DRAWINGS

In the accompanying drawings:
FIG. 1 schematically illustrates a domain sequence of a spider fibroin as an example; and
FIG. 2 schematically illustrates an example device for forming a coating layer made of an adhesive on a fiber.

### DETAILED DESCRIPTION

### (First fiber for rubber reinforcement)

A fiber for rubber reinforcement according to a first embodiment of the present disclosure (hereinafter, may be referred to as "fiber of the first embodiment") uses a protein fiber containing a hydrophobic protein. In other words, the fiber of the first embodiment is a protein fiber containing a hydrophobic protein.

We participated in the Impulsing Paradigm Change through Disruptive Technologies Program (ImPACT) and conducted various studies on the techniques of conventional protein fiber materials obtained by imitating the production method of natural spider silk. We particularly investigated the causes of the problem that conventional protein fibers break easily when compounded with a rubber material and the problem that they cannot sufficiently exhibit a high strength in harsh environments. As a result, we found that these problems are caused by the contact of the fibers with water, in other words, the fiber strength of conventional fibers containing polypeptides derived from natural spider silk proteins decreases when they contact with water. More specifically, it is found that the reason why the fibers break easily when compounded with a rubber material is that an adhesive coated on the fibers is a water-based adhesive. Further, it is found that the reason why they cannot sufficiently exhibit a high strength is that the fibers absorb moisture under high temperature and humidity conditions, which accelerates the deterioration of the fibers.

It is considered that the reason why the fiber strength decreases due to contact with water is that molecules (protein molecules) derived from a conventional natural spider silk protein have an amino acid sequence containing many hydrophilic amino acid units. Based on this, we further studied, especially focusing on the molecular design of protein molecules, and accumulated and analyzed data on the function, properties and productivity of fibers using proteins obtained by fermentation processes using microorganisms. As a result, we have newly created a protein molecule, that is, a hydrophobic protein, which can be industrially produced and has an amino acid sequence with reduced hydrophilic amino acid units, which is not found in biological proteins.

Natural spider silk is obtained from an aqueous solution of protein stored in a secretory gland called silk gland. Due to its hydrophilic properties, the protein can flow as an aqueous solution in internal organs up to a spinneret while changing its molecular structure in the internal environment. On the other hand, the above-mentioned hydrophobic protein has a molecular structure different from that of natural spider silk because it aggregates without easily dissolving in water such as body fluids in living organisms.

The following describes the fiber of the first embodiment in detail based on the embodiment.

### <Hydrophobic protein>

Molecules of the hydrophobic protein contained in the fiber of the first embodiment have been designed, but it is not particularly limited. It may be a protein produced by microorganisms or the like with a gene recombination technique or a protein produced by synthesis.

The hydrophobic protein may be, for example, a protein containing a domain sequence represented by a formula 1: [(A) n motif-REP] m or a formula 2: [(A) n motif-REP] m- (A) n motif. In the hydrophobic protein of the present embodiment, an amino acid sequence (N-terminal sequence and C-terminal sequence) may be further added to either or both of the N-terminal side and the C-terminal side of the domain sequence. The N-terminal sequence and the C-terminal sequence typically are regions having no repetition of amino acid motif and containing about 100 residues of amino acids, but they are not limited to this.

As used herein, the "domain sequence" is an amino acid sequence that produces a crystalline region (typically corresponding to the (A) n motif of an amino acid sequence) and an amorphous region (typically corresponding to REP of an amino acid sequence) and means an amino acid sequence represented by the formula 1: [(A) n motif-REP] m or the formula 2: [(A) n motif-REP] m-(A) n motif. As used herein, the (A) n motif indicates an amino acid sequence mainly composed of alanine residues, and the number of amino acid residues is 2 to 27. The number of amino acid residues of the (A) n motif may be 2 to 20, 4 to 27, 4 to 20, 8 to 20, 10 to 20, 4 to 16, 8 to 16, or 10 to 16. Further, the ratio of the number of alanine residues to the total number of amino acid residues in the (A) n motif may be 40 % or more, 60 % or more, 70 % or more, 80 % or more, 83 % or more, 85 % or more, 86 % or more, 90 % or more, 95 % or more, or 100 % (meaning that it is composed only of alanine residues). At least seven of the plurality of (A) n motifs present in the domain sequence may be composed only of alanine residues. The REP indicates an amino acid sequence containing 2 to 200 amino acid residues. The REP may be an amino acid sequence containing 10 to 200 amino acid residues. The "m" indicates an integer of 2 to 300, and it may be an integer of 10 to 300. The plurality of (A) n motifs may have the same amino acid sequence or different amino acid sequences. The plurality of REPs may have the same amino acid sequence or different amino acid sequences.

The hydrophobic protein may be, for example, one obtained by modifying the amino acid sequence of a naturally derived spider fibroin (for example, the hydrophobic protein may be obtained by modifying the amino acid sequence by modifying the gene sequence of a cloned naturally derived spider fibroin) or may be an artificially designed and synthesized one that is independent of a naturally derived spider fibroin (for example, one that obtains a desired amino acid sequence by chemically synthesizing a nucleic acid encoding a designed amino acid sequence)

The hydrophobic protein may be obtained by, for example, modifying the amino acid sequence of the gene sequence of a cloned naturally derived spider fibroin, which corresponds to, for example, the substitution, deletion, insertion and/or addition of one or more amino acid residues to the gene sequence. The substitution, deletion, insertion and/or addition of amino acid residues can be carried out with methods well known to those skilled in the art, such as partially specific mutagenesis. Specifically, it can be carried out according to the methods described in the literature such as Nucleic Acid Res. 10, 6487(1982) and Methods in Enzymology, 100, 448(1983).

Specific examples of the hydrophobic protein include a modified protein having a domain sequence in which the content of glutamine residues is reduced with respect to a major spinneret drag line protein produced in a spider's major ampullate gland.

The modified protein preferably contains at least one motif selected from a GGX motif and a GPGXX motif in the amino acid sequence of REP.

When the modified protein contains a GPGXX motif in REP, the GPGXX motif content is usually 1 % or more, and it may be 5 % or more and is preferably 10 % or more. The upper limit of the GPGXX motif content is not particularly limited and may be 50 % or less or 30 % or less.

As used herein, the "GPGXX motif content" is a value calculated with the following method.

In a spider fibroin containing a domain sequence represented by the formula 1: [(A) n motif-REP] m or the formula 2: [(A) n motif-REP] m-(A) n motif and in all REPs included in a sequence obtained by excluding the sequence from the (A) n motif located on the tip of the C-terminal side to the C-terminal of the domain sequence from the domain sequence, a number obtained by multiplying the total number of GPGXX motifs contained in the region by three (that is, the total number of G and P in the GPPGXX motifs) is set as "s", the total number of amino acid residues of all REPs in a sequence obtained by excluding the sequence from the (A) n motif located on the tip of the C-terminal side to the C-terminal of the domain sequence from the domain sequence and further excluding the (A) n motif is set as "t", and the GPGXX motif content is calculated as "s/t".

In calculating the GPGXX motif content, the reason why the "sequence obtained by excluding the sequence from the (A) n motif located on the tip of the C-terminal side to the C-terminal of the domain sequence from the domain sequence" is taken as the subject is that the "sequence from the (A) n motif located on the tip of the C-terminal side to the C-terminal of the domain sequence" (sequence corresponding to REP) may contain a sequence having a low correlation with the sequence characteristic of a spider fibroin, and it affects the calculation result of GPGXX motif content if the "m" is small (that is, when the domain sequence is short). The above is to eliminate the effect. When a "GPGXX motif' is located at the C-terminal of REP, it is treated as a "GPGXX motif' even if the "XX" is, for example, "AA".

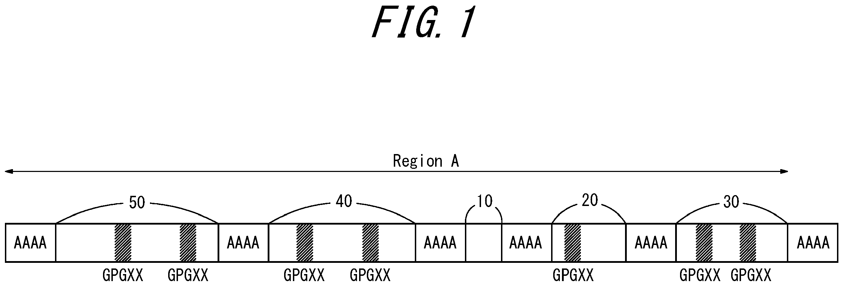

FIG. 1 schematically illustrates a domain sequence of a spider fibroin. The method of calculating the GPGXX motif content will be specifically described with reference to FIG. 1. First, in the domain sequence of a spider fibroin illustrated in FIG. 1 (which is a "[(A) n motif-REP] m-(A) n motif' type), all REPs are included in the "sequence obtained by excluding the sequence from the (A) n motif located on the tip of the C-terminal side to the C-terminal of the domain sequence from the domain sequence" (sequence indicated as "region A" in FIG. 1), so that the number of GPGXX motifs for calculating "s" is 7, and "s" is 7 × 3 = 21. For the same reason that all REPs are included in the "sequence obtained by excluding the sequence from the (A) n motif located on the tip of the C-terminal side to the C-terminal of the domain sequence from the domain sequence" (sequence indicated as "region A" in FIG. 1), the total number "t" of amino acid residues in all REPs further excluding the (A) n motif from the sequence is 50 + 40 + 10 + 20 + 30 = 150. Next, "s/t" (%) can be calculated by dividing "s" by "t", and in the case of the fibroin in FIG. 1, 21/150 = 14.0 %.

The modified protein preferably has a glutamine residue content of 9 % or less, more preferably 7 % or less, further preferably 4 % or less, and particularly preferably 0 %.

As used herein, the "glutamine residue content" is a value calculated with the following method.

In a spider fibroin containing a domain sequence represented by the formula 1: [(A) n motif-REP] m or the formula 2: [(A) n motif-REP] m-(A) n motif and in all REPs included in a sequence obtained by excluding the sequence from the (A) n motif located on the tip of the C-terminal side to the C-terminal of the domain sequence from the domain sequence (sequence corresponding to the "region A" in FIG. 1), the total number of glutamine residues included in that region is set as "u", the total number of amino acid residues of all REPs in a sequence obtained by excluding the sequence from the (A) n motif located on the tip of the C-terminal side to the C-terminal of the domain sequence from the domain sequence and further excluding the (A) n motif is set as "t", and the glutamine residue content is calculated as "u/t". In calculating the glutamine residue content, the reason why the "sequence obtained by excluding the sequence from the (A) n motif located on the tip of the C-terminal side to the C-terminal of the domain sequence from the domain sequence" is taken as the subject is the same as the reason described above.

For the modified protein, the domain sequence may have an amino acid sequence corresponding to one obtained by deleting one or more glutamine residues in REP or replacing one or more glutamine residues in REP with other amino acid residues in a naturally derived spider fibroin.

The "other amino acid residue" may be an amino acid residue other than the glutamine residue, but it is preferably an amino acid residue having a larger hydrophobicity index (HI) than the glutamine residue. The hydrophobicity indexes (HI) of amino acid residues are listed in Table 1.

**Table 1**

| Amino acid | HI | Amino acid | HI |
|---|---|---|---|
| Isoleucine (Ile) | 4.5 | Tryptophan (Trp) | -0.9 |
| Valine (Val) | 4.2 | Tyrosine (Tyr) | -1.3 |
| Leucine (Leu) | 3.8 | Proline (Pro) | -1.6 |
| Phenylalanine (Phe) | 2.8 | Histidine (His) | -3.2 |
| Cysteine (Cys) | 2.5 | Asparagine (Asn) | -3.5 |
| Methionine (Met) | 1.9 | Aspartic acid (Asp) | -3.5 |
| Alanine (Ala) | 1.8 | Glutamine (Gln) | -3.5 |
| Glycine (Gly) | -0.4 | Glutamic acid (Glu) | -3.5 |
| Threonine (Thr) | -0.7 | Lysine (Lys) | -3.9 |
| Serine (Ser) | -0.8 | Arginine (Arg) | -4.5 |

As listed in Table 1, examples of an amino acid residue having a larger hydrophobicity index than the glutamine residue include amino acid residues selected from isoleucine (I), valine (V), leucine (L), phenylalanine (F), cysteine (C), methionine (M), alanine (A), glycine (G), threonine (T), serine (S), tryptophan (W), tyrosine (Y), proline (P) and histidine (H). Among the above, amino acid residues selected from isoleucine (I), valine (V), leucine (L), phenylalanine (F), cysteine (C), methionine (M) and alanine (A) are more preferable, and amino acid residues selected from isoleucine (I), valine (V), leucine (L) and phenylalanine (F) are still more preferable.

For the modified protein, the hydrophobicity of REP is preferably -0.8 or more, more preferably -0.7 or more, further preferably 0 or more, still more preferably 0.3 or more, and particularly preferably 0.4 or more. The upper limit of the hydrophobicity of REP is not particularly limited, and it may be 1.0 or less or 0.7 or less.

As used herein, the "hydrophobicity of REP" is a value calculated with the following method.

In a protein such as a spider fibroin containing a domain sequence represented by the formula 1: [(A) n motif-REP] m or the formula 2: [(A) n motif-REP] m-(A) n motif and in all REPs included in a sequence obtained by excluding the sequence from the (A) n motif located on the tip of the C-terminal side to the C-terminal of the domain sequence from the domain sequence (sequence corresponding to the "region A" in FIG. 1), the sum of the hydrophobicity indexes of each amino acid residue in the region is set as "v", the total number of amino acid residues of all REPs in a sequence obtained by excluding the sequence from the (A) n motif located on the tip of the C-terminal side to the C-terminal of the domain sequence from the domain sequence and further excluding the (A) n motif is set as "t", and the hydrophobicity of REP is calculated as "v/t". In calculating the hydrophobicity of REP, the reason why the "sequence obtained by excluding the sequence from the (A) n motif located on the tip of the C-terminal side to the C-terminal of the domain sequence from the domain sequence" is taken as the subject is the same as the reason described above.

As used herein, the "hydrophobicity of REP" is synonymous with "average HI".

The modified protein may have, in addition to a modification corresponding to deletion of one or more glutamine residues in REP and/or substitution of one or more glutamine residues in REP with other amino acid residues of the domain sequence of a naturally derived spider fibroin, a modification of the amino acid sequence corresponding to further substitution, deletion, insertion and/or addition of one or more amino acid residues compared to the domain sequence of a naturally derived spider fibroin.

The modified protein may be obtained, for example, by deleting one or more glutamine residues in REP from the gene sequence of a cloned naturally derived spider fibroin, and/or replacing one or more glutamine residues in REP with other amino acid residues. Further, it may be obtained, for example, by designing an amino acid sequence corresponding to deleting one or more glutamine residues in REP from the amino acid sequence of a naturally derived spider fibroin and/or replacing one or more glutamine residues in REP with other amino acid residues, and chemically synthesizing a nucleic acid encoding the designed amino acid sequence.

More specifically, examples of the modified protein include a (6-i) modified fibroin containing the amino acid sequence set forth in SEQ ID NO: 5, SEQ ID NO: 6, SEQ ID NO: 7, SEQ ID NO: 8, SEQ ID NO: 9, SEQ ID NO: 10, SEQ ID NO: 11 or SEQ ID NO: 21, and a (6-ii) modified fibroin containing an amino acid sequence having 90 % or more sequence identity with the amino acid sequence set forth in SEQ ID NO: 5, SEQ ID NO: 6, SEQ ID NO: 7, SEQ ID NO: 8, SEQ ID NO: 9, SEQ ID NO: 10, SEQ ID NO: 11 or SEQ ID NO: 21.

The following describes the (6-i) modified fibroin.

The amino acid sequence set forth in SEQ ID NO: 1 (Met-PRT410) is based on the base sequence and amino acid sequence of Nephila clavipes (GenBank accession number: P46804.1, GI: 1174415), which is a naturally derived fibroin, and it is obtained by modifying the amino acid to improve the productivity, such as setting the number of consecutive alanine residues to 5 in the amino acid sequence with consecutive alanine residues in the (A) n motif. On the other hand, since the glutamine residue (Q) is not modified in Met-PRT410, the glutamine residue content is about the same as the glutamine residue content of a naturally derived fibroin.

The amino acid sequence set forth in SEQ ID NO: 5 (M_PRT888) is obtained by replacing all QQ with VL in Met-PRT410 (SEQ ID NO: 1).

The amino acid sequence set forth in SEQ ID NO: 6 (M_PRT965) is obtained by replacing all QQ with TS in Met-PRT410 (SEQ ID NO: 1) and replacing the remaining Q with A.

The amino acid sequence set forth in SEQ ID NO: 7 (M_PRT889) is obtained by replacing all QQ with VL in Met-PRT410 (SEQ ID NO: 1) and replacing the remaining Q with I.

The amino acid sequence set forth in SEQ ID NO: 8 (M_PRT916) is obtained by replacing all QQ with VI in Met-PRT410 (SEQ ID NO: 1) and replacing the remaining Q with L.

The amino acid sequence set forth in SEQ ID NO: 9 (M_PRT918) is obtained by replacing all QQ with VF in Met-PRT410 (SEQ ID NO: 1) and replacing the remaining Q with I.

The amino acid sequence set forth in SEQ ID NO: 10 (M_PRT699) is obtained by replacing all QQ with VL in M-PRT525 (SEQ ID NO: 12). The amino acid sequence set forth in SEQ ID NO: 12 (M_PRT525) is obtained by inserting two alanine residues into a region (A5) where alanine residues are continuous in Met-PRT410 (SEQ ID NO: 1) and deleting two domain sequences on the C-terminal side and replacing 13 glutamine residues (Q) with serine residues (S) or proline residues (P) so that the molecular weight is almost the same as that of Met-PRT410.

The amino acid sequence set forth in SEQ ID NO: 11 (M_PRT698) is obtained by replacing all QQ with VL in M_PRT525 (SEQ ID NO: 12) and replacing the remaining Q with I.

The amino acid sequence set forth in SEQ ID NO: 21 (Met-PRT966) is obtained by replacing all QQ with VF in the amino acid sequence set forth in SEQ ID NO: 2 (the amino acid sequence before the amino acid sequence set forth in SEQ ID NO: 20 is added to the C-terminal) and replacing the remaining Q with I.

As listed in Table 2, the amino acid sequences set forth in SEQ ID NO: 5, SEQ ID NO: 6, SEQ ID NO: 7, SEQ ID NO: 8, SEQ ID NO: 9, SEQ ID NO: 10, SEQ ID NO: 11 and SEQ ID NO: 21 all have a glutamine residue content of 9 % or less.

**Table 2**

| Modified fibroin | | Glutamine residue content | GPGXX motif content | Hydrophobicity of REP |
|---|---|---|---|---|
| Met-PRT410 | SEQ ID NO: 1 | 17.7% | 27.9% | -1.52 |
| M PRT888 | SEQ ID NO: 5 | 6.3% | 27.9% | -0.07 |
| M PRT965 | SEQ ID NO: 6 | 0.0% | 27.9% | -0.65 |
| M PRT889 | SEQ ID NO: 7 | 0.0% | 27.9% | 0.35 |
| M PRT916 | SEQ ID NO: 8 | 0.0% | 27.9% | 0.47 |
| M PRT918 | SEQ ID NO: 9 | 0.0% | 27.9% | 0.45 |
| M PRT525 | SEQ ID NO: 12 | 13.7% | 26.4% | -1.24 |
| M PRT699 | SEQ ID NO: 10 | 3.6% | 26.4% | -0.78 |
| M PRT698 | SEQ ID NO: 11 | 0.0% | 26.4% | -0.03 |
| Met-PRT966 | SEQ ID NO: 21 | 0.0% | 28.0% | 0.35 |

The (6-i) modified fibroin may contain the amino acid sequence set forth in SEQ ID NO: 5, SEQ ID NO: 6, SEQ ID NO: 7, SEQ ID NO: 8, SEQ ID NO: 9, SEQ ID NO: 10, SEQ ID NO: 11 or SEQ ID NO: 21.

The (6-ii) modified fibroin contains an amino acid sequence having 90 % or more sequence identity with the amino acid sequence set forth in

SEQ ID NO: 5, SEQ ID NO: 6, SEQ ID NO: 7, SEQ ID NO: 8, SEQ ID NO: 9, SEQ ID NO: 10, SEQ ID NO: 11 or SEQ ID NO: 21. The (6-ii) modified fibroin is also a protein containing a domain sequence represented by the formula 1: [(A) n motif-REP] m or the formula 2: [(A) n motif-REP] m-(A) n motif. The sequence identity is preferably 95 % or more.

The (6-ii) modified fibroin preferably has a glutamine residue content of 9 % or less. Further, the (6-ii) modified fibroin preferably has a GPGXX motif content of 10 % or more.

The modified protein may contain a tag sequence at either or both of the N-terminal and the C-terminal. This enables, for example, isolation, immobilization, detection, and visualization of the modified protein.

More specifically, examples of the modified protein containing a tag sequence include a (6-iii) modified fibroin containing the amino acid sequence set forth in SEQ ID NO: 13, SEQ ID NO: 14, SEQ ID NO: 15, SEQ ID NO: 16, SEQ ID NO: 17, SEQ ID NO: 18, SEQ ID NO: 19 or SEQ ID NO: 22, and a (6-iv) modified fibroin containing an amino acid sequence having 90 % or more sequence identity with the amino acid sequence set forth in SEQ ID NO: 13, SEQ ID NO: 14, SEQ ID NO: 15, SEQ ID NO: 16, SEQ ID NO: 17, SEQ ID NO: 18, SEQ ID NO: 19 or SEQ ID NO: 22.

The amino acid sequences set forth in SEQ ID NO: 13, SEQ ID NO: 14, SEQ ID NO: 15, SEQ ID NO: 16, SEQ ID NO: 17, SEQ ID NO: 18, SEQ ID NO: 19 and SEQ ID NO: 22 are obtained by adding the amino acid sequence set forth in SEQ ID NO: 3 (including His tag sequence and hinge sequence) at the N-terminal of the amino acid sequences set forth in SEQ ID NO: 5, SEQ ID NO: 6, SEQ ID NO: 7, SEQ ID NO: 8, SEQ ID NO: 9, SEQ ID NO: 10, SEQ ID NO: 11 and SEQ ID NO: 21, respectively. Since only a tag sequence is added to the N-terminal, there is no change in the glutamine residue content, and the amino acid sequences set forth in SEQ ID NO: 13, SEQ ID NO: 14, SEQ ID NO: 15, SEQ ID NO: 16, SEQ ID NO: 17, SEQ ID NO: 18, SEQ ID NO: 19 and SEQ ID NO: 22 all have a glutamine residue content of 9 % or less (Table 3).

**Table 3**

| Modified fibroin | | Glutamine residue content | GPGXX motif content | Hydrophobicity of REP |
|---|---|---|---|---|
| PRT888 | SEQ ID NO: 13 | 6.3% | 27.9% | -0.07 |
| PRT965 | SEQ ID NO: 14 | 0.0% | 27.9% | -0.65 |
| PRT889 | SEQ ID NO: 15 | 0.0% | 27.9% | 0.35 |
| PRT916 | SEQ ID NO: 16 | 0.0% | 27.9% | 0.47 |
| PRT918 | SEQ ID NO: 17 | 0.0% | 27.9% | 0.45 |
| PRT699 | SEQ ID NO: 18 | 3.6% | 26.4% | -0.78 |
| PRT698 | SEQ ID NO: 19 | 0.0% | 26.4% | -0.03 |
| PRT966 | SEQ ID NO: 22 | 0.0% | 28.0% | 0.35 |

The (6-iii) modified fibroin may contain the amino acid sequence set forth in SEQ ID NO: 13, SEQ ID NO: 14, SEQ ID NO: 15, SEQ ID NO: 16, SEQ ID NO: 17, SEQ ID NO: 18, SEQ ID NO: 19 or SEQ ID NO: 22.

The (6-iv) modified fibroin contains an amino acid sequence having 90 % or more sequence identity with the amino acid sequence set forth in SEQ ID NO: 13, SEQ ID NO: 14, SEQ ID NO: 15, SEQ ID NO: 16, SEQ ID NO: 17, SEQ ID NO: 18, SEQ ID NO: 19 or SEQ ID NO: 22. The (6-iv) modified fibroin is also a protein containing a domain sequence represented by the formula 1: [(A) n motif-REP] m or the formula 2: [(A) n motif-REP] m-(A) n motif. The sequence identity is preferably 95 % or more.

The (6-iv) modified fibroin preferably has a glutamine residue content of 9 % or less. Further, the (6-iv) modified fibroin preferably has a GPGXX motif content of 10 % or more.

The modified protein may contain a secretory signal for releasing a protein produced in a recombinant protein production system to the outside of a host. The sequence of the secretory signal may be appropriately set according to the type of the host.

The hydrophobic protein is preferably a protein such as a spider silk protein, where the sum of the hydrophobicity indexes (HI) of all the constituent amino acid residues is calculated and a value (average HI) obtained by dividing the sum by the total number of amino acid residues is 0 or more. In this case, the resulting fiber is more difficult to break. The hydrophobicity index (HI) is as listed in Table 1.

The hydrophobic protein may be produced, for example, by preparing a host transformed with an expression vector having a nucleic acid sequence encoding the hydrophobic protein and one or more regulatory sequences operably linked to the nucleic acid sequence, and expressing the nucleic acid by the host.

A method of producing the nucleic acid encoding the hydrophobic protein is not particularly limited. For example, the nucleic acid may be produced with a method of amplifying and cloning by a polymerase chain reaction (PCR) or the like using a gene encoding a natural spider silk protein, or a method of chemically synthesizing the nucleic acid. The method of chemically synthesizing the nucleic acid is not particularly limited, either. For example, the gene can be chemically synthesized with a method of ligating oligonucleotides automatically synthesized by AKTA oligopilot plus 10/100 (GE Healthcare Japan Co., Ltd.) by PCR or the like based on the amino acid sequence information of a spider silk protein obtained from NCBI's web database or the like. At this time, to facilitate purification and/or confirmation of the hydrophobic protein, it is acceptable to synthesize a nucleic acid encoding a hydrophobic protein containing an amino acid sequence in which an amino acid sequence containing a start codon and a HislO tag is added to the N-terminal.

The regulatory sequence is a sequence that controls the expression of recombinant protein in a host (such as a promoter, an enhancer, a ribosome binding sequence, or a transcription termination sequence), which can be appropriately selected depending on the type of the host. An inducible promoter that works in a host cell and can induce the expression of the target hydrophobic protein may be used as the promoter. An inducible promoter is a promoter that can control transcription by the presence of an inducing substance (expression inducer), the absence of a repressor molecule, or physical factors such as an increase or decrease in temperature, osmotic pressure, or pH value.

The type of the expression vector may be appropriately selected depending on the type of the host, such as a plasmid vector, a viral vector, a cosmid vector, a fosmid vector, and an artificial chromosome vector. The expression vector is preferably a vector that can be autonomously replicated in a host cell or can be integrated into the chromosome of the host and contains a promoter at a position where a nucleic acid encoding a spider silk protein can be transcribed.

The host is preferably any of prokaryotes and eukaryotes such as yeast, filamentous fungi, insect cells, animal cells and plant cells.

When a prokaryote such as a bacterium is used as the host, the expression vector is preferably a vector that can be autonomously replicated in the prokaryote and at the same time contains a promoter, a ribosome binding sequence, a nucleic acid encoding the hydrophobic protein, and a transcription termination sequence. It may contain a gene that controls the promoter.

Examples of the prokaryote include microorganisms belonging to the genera Escherichia, Brevibacillus, Serratia, Bacillus, Microbacterium, Brevibacterium, Corynebacterium, and Pseudomonas. Examples of microorganisms belonging to the genus Escherichia include Escherichia coli. Examples of microorganisms belonging to the genus Brevibacillus include Brevibacillus agri. Examples of microorganisms belonging to the genus Serratia include Serratia liquefaciens. Examples of microorganisms belonging to the genus Bacillus include Bacillus subtilis. Examples of microorganisms belonging to the genus Microbacterium include Microbacterium ammoniaphilum. Examples of the microorganism belonging to the genus Brevibacterium include Brevibacterium divaricatum. Examples of microorganisms belonging to the genus Corynebacterium include Corynebacterium ammoniagenes. Examples of microorganisms belonging to the genus Pseudomonas include Pseudomonas putida.

When a prokaryote is used as the host, examples of the vector that introduces a nucleic acid encoding the hydrophobic protein include pBTrp2 (manufactured by Boehringer Mannheim), pGEX (manufactured by Pharmacia), pUC18, pBluescriptII, pSupex, pET22b, pCold, pUB110, and pNCO2 (JP2002238569A).

Examples of a eukaryote as the host include yeast and filamentous fungi (such as mold). Examples of the yeast include yeast belonging to the genera Saccharomyces, Pichia, and Schizosaccharomyces. Examples of the filamentous fungi include filamentous fungi belonging to the genera Aspergillus, Penicillium, and Trichoderma.

When a eukaryote is used as the host, examples of the vector that introduces a nucleic acid encoding the hydrophobic protein include YEp13(ATCC37115) and YEp24(ATCC37051). A method of introducing the expression vector into the host cell is not limited if it is a method of introducing DNA into the host cell. Examples thereof include a method using calcium ions [Proc. Natl. Acad. Sci. USA, 69, 2110 (1972)], an electroporation method, a spheroplast method, a protoplast method, a lithium acetate method, and a competent method

A method of expressing the nucleic acid by a host transformed with an expression vector may be, in addition to direct expression, secretory production, fusion protein expression and the like according to, for example, the method described in Molecular Cloning 2nd Edition.

The hydrophobic protein can be produced, for example, by culturing a transformed host in a culture medium, producing and accumulating the hydrophobic protein in the culture medium, and collecting the hydrophobic protein from the culture medium. A method of culturing the transformed host in the culture medium may be a method usually used for culturing a host.

When the host is a prokaryote such as Escherichia coli or a eukaryote such as yeast, the culture medium may be either a natural medium or a synthetic medium as long as it contains a carbon source, a nitrogen source, inorganic salts and the like that can be assimilated by the host and is capable of efficiently culturing the host.

The carbon source may be any material that can be assimilated by the host, and examples thereof include glucose, fructose, sucrose, carbohydrates containing the above such as molasses, starch and starch hydrolysates, organic acids such as acetic acid and propionic acid, and alcohols such as ethanol and propanol.

Examples of the nitrogen source include ammonium salts of inorganic or organic acids such as ammonia, ammonium chloride, ammonium sulfate, ammonium acetate and ammonium phosphate, other nitrogen-containing compounds, peptone, meat extract, yeast extract, corn steep liquor, casein hydrolysate, soybean cake and soybean cake hydrolysate, and various fermentation microorganisms and their digests.

Examples of the inorganic salts include primary potassium phosphate, secondary potassium phosphate, magnesium phosphate, magnesium sulfate, sodium chloride, ferrous sulfate, manganese sulfate, copper sulfate, and calcium carbonate.

Culture of prokaryotes such as Escherichia coli or eukaryotes such as yeast can be carried out, for example, under aerobic conditions such as shaking culture or deep-aeration stirring culture. The culture temperature is, for example, 15 °C to 40 °C. The culture time is usually 16 hours to 7 days. The pH of the culture medium during the culture is preferably maintained at 3.0 to 9.0. The pH of the culture medium can be adjusted using an inorganic acid, an organic acid, an alkaline solution, urea, calcium carbonate, ammonia or the like.

Antibiotics such as ampicillin and tetracycline may be added to the culture medium during the culture if necessary. In a case of culturing a microorganism transformed with an expression vector using an inducible promoter as a promoter, an inducer may be added to the medium if necessary. For example, when culturing a microorganism transformed with an expression vector using a lac promoter, isopropyl-β-D-thiogalactopyranoside or the like may be added to the medium, and when culturing a microorganism transformed with an expression vector using a trp promoter, indole acrylic acid or the like may be added to the medium.

A hydrophobic protein produced by the transformed host can be isolated and purified with a method commonly used for protein isolation and purification. For example, when the hydrophobic protein is expressed in a lysed state in cells, the host cells are collected by centrifugation and suspended in a water-based buffer after the culture is completed, and then the host cells are crushed with an ultrasonic crusher, a French press, a Manton-Gaulin homogenizer, a Dynomill, or the like to obtain a cell-free extract. With the supernatant obtained by centrifuging the cell-free extract, a purified sample can be obtained using a method usually used for protein isolation and purification, that is, using a solvent extraction method, a salting out method using ammonium sulfate, a desalting method, a precipitation method using organic solvent, an anion exchange chromatography method using a resin such as diethylaminoethyl (DEAE)-Sepharose, DIAION HPA-75 (manufactured by Mitsubishi Kasei Corporation), a cation exchange chromatography method using a resin such as S-Sepharose FF (manufactured by Pharmacia), a hydrophobic chromatography method using a resin such as butyl Sepharose and phenyl Sepharose, a gel filtration method using molecular sieves, an affinity chromatography method, a chromatofocusing method, and a method such as electrophoresis such as isoelectric point electrophoresis, where these methods may be used alone or in combination of two or more.

The chromatography is preferably column chromatography using TOYOPEARL Phenyl (Tosoh), TOYOPEARL DEAE (Tosoh), and Sephadex G-150 (Pharmacia Biotech).

When the hydrophobic protein is expressed by forming an insoluble substance in cells, the host cells are similarly recovered, crushed, and centrifuged to recover the insoluble substance of the hydrophobic protein as a precipitate fraction. The insoluble substance of the recovered hydrophobic protein can be solubilized with a protein denaturant. After the operation, a purified sample of the hydrophobic protein can be obtained with the same isolation and purification method as described above.

When the hydrophobic protein is secreted extracellularly, the hydrophobic protein can be recovered from the culture supernatant. That is, the culture is treated with a method such as centrifugation to obtain a culture supernatant, and a purified sample can be obtained from the culture supernatant using the same isolation and purification method as described above.

### <Protein fiber>

The fiber of the first embodiment is a protein fiber containing the above-described hydrophobic protein and can be produced by spinning the hydrophobic protein. Since the fiber of the first embodiment contains the hydrophobic protein that has been subjected to a specific molecular design as described above, the decrease in fiber strength is significantly suppressed when it is moistened by immersion in water or the like. Therefore, the fiber of the first embodiment hardly breaks even if it is compounded with a rubber material, particularly when it is subjected to an operation requiring contact with a water-based component.

The spinning method is not particularly limited if it can spin the hydrophobic protein, and examples thereof include dry spinning, melt spinning, and wet spinning. Wet spinning is a preferable spinning method. Further, an undiluted spinning solution (dope solution) in which the hydrophobic protein is dissolved in a solvent can be used in any of the methods.

The following mainly describes wet spinning as an example.

In wet spinning, first, an undiluted spinning solution is extruded from a spinning nozzle (nozzle) into a coagulating solution (coagulating solution tank), and an undrawn yarn in the shape of a yarn can be obtained by solidifying the hydrophobic protein in the coagulating solution.

The content of the hydrophobic protein in the undiluted spinning solution may be 1 % by mass or more, 2 % by mass or more, 4 % by mass or more, 7 % by mass or more, 10 % by mass or more, or 15 % by mass or more, and it may be 40 % by mass or less, 35 % by mass or less, 30 % by mass or less, or 25 % by mass or less.

The solvent used in the undiluted spinning solution is not particularly limited if it can dissolve or disperse the hydrophobic protein. Specific examples of the solvent include organic solvent such as dimethyl sulfoxide (DMSO), N,N-dimethylformamide (DMF), N-methylpyrrolidone (NMP), N,N-dimethylacetamide (DMAc), hexafluoro-2-propanol (HFIP), hexafluoroacetone (HFA), and formic acid. The solvent may be a solvent obtained by adding a dissolution promoter, which will be described later, to water. The solvent may be used alone or in combination of two or more.

The solvent is particularly preferably at least one selected from the group consisting of dimethyl sulfoxide, formic acid, and dimethyl sulfoxide or formic acid added with a dissolution promoter.

The undiluted spinning solution may further contain a dissolution promoter. The dissolution promoter facilitates the preparation of the undiluted spinning solution.

The dissolution promoter may be, for example, an inorganic salt containing a Lewis acid and a Lewis base described below. Examples of the Lewis base include oxoacid ion (such as nitrate ion and perchlorate ion), metal oxoacid ion (such as permanganate ion), halide ion, thiocyanate ion, and cyanate ion. Examples of the Lewis acid include metal ions such as alkali metal ion and alkaline earth metal ion, polyatomic ions such as ammonium ion, and complex ions. Examples of the inorganic salt include lithium salts such as lithium chloride, lithium bromide, lithium iodide, lithium nitrate, lithium perchlorate and lithium thiocyanate, calcium salts such as calcium chloride, calcium bromide, calcium iodide, calcium nitrate, calcium perchlorate and calcium thiocyanate, iron salts such as iron chloride, iron bromide, iron iodide, iron nitrate, iron perchlorate and iron thiocyanate, aluminum salts such as aluminum chloride, aluminum bromide, aluminum iodide, aluminum nitrate, aluminum perchlorate and aluminum thiocyanate, potassium salts such as potassium chloride, potassium bromide, potassium iodide, potassium nitrate, potassium perchlorate and potassium thiocyanate, sodium salts such as sodium chloride, sodium bromide, sodium iodide, sodium nitrate, sodium perchlorate and sodium thiocyanate, zinc salts such as zinc chloride, zinc bromide, zinc iodide, zinc nitrate, zinc perchlorate and zinc thiocyanate, magnesium salts such as magnesium chloride, magnesium bromide, magnesium iodide, magnesium nitrate, magnesium perchlorate and magnesium thiocyanate, barium salts such as barium chloride, barium bromide, barium iodide, barium nitrate, barium perchlorate and barium thiocyanate, and strontium salts such as strontium chloride, strontium bromide, strontium iodide, strontium nitrate, strontium perchlorate, and strontium thiocyanate. These inorganic salts are used as a dissolution promoter of the hydrophobic protein in formic acid. When the undiluted spinning solution contains a dissolution promoter (the above-described inorganic salt), the hydrophobic protein can be dissolved in the undiluted spinning solution at a high concentration. As a result, the production efficiency of the protein fiber can be further improved, and the quality of the protein fiber and the physical properties such as stress of the protein fiber can be improved. The inorganic salt may be at least one selected from the group consisting of lithium chloride and calcium chloride. The dissolution promoter may be used alone or in combination of two or more.

The content of the dissolution promoter in the undiluted spinning solution may be 0.1 % by mass or more, 1 % by mass or more, 4 % by mass or more, 7 % by mass or more, 10 % by mass or more, or 15 % by mass or more, and it may be 20 % by mass or less, 16 % by mass or less, 12 % by mass or less, or 9 % by mass or less.

The undiluted spinning solution may further contain various additives, if necessary. Examples of the additive include a plasticizer, a leveling agent, a cross-linking agent, a crystal nucleating agent, an antioxidant, an ultraviolet absorber, a colorant, a filler, and a synthetic resin. The total content of the additive may be 50 parts by mass or less with respect to 100 parts by mass of the total amount of protein in the undiluted spinning solution.

The undiluted spinning solution may further contain alcohol if the effects of the present disclosure are not impaired.

The viscosity of the undiluted spinning solution may be appropriately set according to the spinning method, and it may be, for example, 100 cP to 15,000 cP (centipoise) at 35 °C. The viscosity of the undiluted spinning solution can be measured using, for example, the product name "EMS viscometer" manufactured by Kyoto Electronics Manufacturing Co., Ltd.

The coagulating solution may be any solution that has the function of desolvation, and examples thereof include lower alcohols having 1 to 5 carbon atoms such as methanol, ethanol and 2-propanol, and acetone. The coagulating solution may be added with water as appropriate. The temperature of the coagulating solution is preferably 0 °C to 30 °C. When a syringe pump having a nozzle with a diameter of 0.1 mm to 0.6 mm is used as the spinning nozzle, the extrusion speed per hole is preferably 0.2 ml/hour to 6.0 ml/hour and more preferably 1.4 ml/hour to 4.0 ml/hour. The length of the coagulating solution tank is not limited if it can efficiently remove the solvent, and it may be, for example, 200 mm to 500 mm. The collecting speed of the undrawn yarn may be, for example, 1 m/min to 20 m/min and is preferably 1 m/min to 3 m/min. The residence time may be, for example, 0.01 minutes to 3 minutes and is preferably 0.05 minutes to 0.15 minutes. Further, a pre-drawn yarn may be obtained by drawing (pre-drawing) in the coagulating solution. To suppress evaporation of the lower alcohol, the coagulating solution may be kept at a low temperature and the yarn may be collected as undrawn yarn. The coagulating solution tank may be provided in multiple stages, and the yarn may be drawn in each stage or a specific stage, if necessary.

Next, the obtained undrawn yarn (or pre-drawn yarn) may be drawn to obtain a drawn yarn (protein fiber). Examples of the drawing method include wet-heat drawing and dry-heat drawing.

The wet-heat drawing can be performed in warm water, in a solution obtained by adding an organic solvent or the like to warm water, or in steam heating. The temperature may be, for example, 50 °C to 90 °C and is preferably 75 °C to 85 °C. In the wet-heat drawing, the undrawn yarn (or the pre-drawn yarn) may be drawn, for example, 1 to 10 times and preferably 2 to 8 times.

The dry-heat drawing can be performed using an electric tube furnace, a dry heat plate, or the like. The temperature may be, for example, 140 °C to 270 °C and is preferably 160 °C to 230 °C. In the dry-heat drawing, the undrawn yarn (or the pre-drawn yarn) can be drawn, for example, 0.5 to 8 times and preferably 1 to 4 times.

The wet-heat drawing and the dry-heat drawing may be performed individually, or they may be performed in multiple stages or in combination. For example, the drawing may be performed with first-step drawing being wet-heat drawing and second-step drawing being dry-heat drawing, or the drawing may be performed with first-step drawing being wet-heat drawing, second-step drawing being wet-heat drawing, and third-step drawing being dry-heat drawing. That is, the drawing may be performed by appropriately combining wet-heat drawing and dry-heat drawing.

The final draw ratio after drawing may be, for example, 5 to 20 times and is preferably 6 to 11 times that of the undrawn yarn (or the pre-drawn yarn).

The fiber after drawing may be taken as the fiber of the first embodiment, but the fiber of the first embodiment may be obtained by, after the drawing, further chemically cross-linking the polypeptide molecules in the obtained protein fiber. Examples of a functional group that can be crosslinked include an amino group, a carboxyl group, a thiol group and a hydroxy group. For example, an amino group of the lysine side chain contained in the polypeptide can be crosslinked with a carboxyl group of the glutamic acid or aspartic acid side chain by dehydration condensation through an amide bond. The cross-linking may be carried out by a dehydration condensation reaction under vacuum heating or may be carried out using a dehydration condensation agent such as carbodiimide.

The cross-linking between polypeptide molecules may be carried out using a cross-linking agent such as carbodiimide or glutaraldehyde or may be carried out using an enzyme such as transglutaminase. Carbodiimide is a compound represented by the general formula R1N = C = NR2 (where R1 and R2 independently represent an alkyl group having 1 to 6 carbon atoms and an organic group containing a cycloalkyl group, respectively). Specific examples of the carbodiimide include 1-ethyl-3-(3-dimethylaminopropyl) carbodiimide hydrochloride (EDC), N,N'-dicyclohexyl carbodiimide (DCC), 1-cyclohexyl-3-(2-morpholinoethyl) carbodiimide, and diisopropyl carbodiimide (DIC). Among the above, the carbodiimide is preferably EDC or DIC because EDC and DIC have a high ability to form amide bonds between polypeptide molecules and easily lead to a cross-linking reaction.

The cross-linking treatment is preferably carried out by applying a cross-linking agent to the protein fiber and performing vacuum heating and drying. A pure cross-linking agent may be applied to the protein fiber, or a cross-linking agent that has been diluted to a concentration of 0.005 % to 10 % by mass with a lower alcohol having 1 to 5 carbon atoms and a buffer or the like may be applied to the protein fiber. The cross-linking treatment is preferably carried out at a temperature of 20 °C to 45 °C for 3 to 42 hours. The protein fiber obtains a higher stress (strength) through the cross-linking treatment.

As described above, β-sheet crystals are oriented by spinning with a dope solution in which the protein has been dissolved, so that the obtained fiber has an initial tensile modulus of elasticity close to that of a highstrength fiber obtained by liquid crystalline spinning with fiber tension. Further, the obtained fiber tends to be tough against the compression strain input in the fiber axis direction, and a fracture surface in which cracks occur along the fiber axis direction is unlikely to occur. The reason is considered as the interaction between β-sheet crystals oriented in the fiber axis direction of the protein or the higher order structure of the protein.

### (Second fiber for rubber reinforcement)

A fiber for rubber reinforcement according to the second embodiment of the present disclosure (hereinafter, may be referred to as "fiber of the second embodiment") uses a protein fiber having an initial tensile modulus of elasticity of 2.0 GPa or more when wet. In other words, the fiber of the second embodiment is a protein fiber having an initial tensile modulus of elasticity of 2.0 GPa or more when wet. As described above, the fiber of the second embodiment has a high initial tensile modulus of elasticity when wet, so that the decrease in fiber strength is significantly suppressed when it is moistened by immersion in water or the like. Therefore, the fiber of the second embodiment hardly breaks even if it is compounded with a rubber material, particularly when it is subjected to an operation requiring contact with a water-based component.

The fiber of the second embodiment includes the fiber of the first embodiment described above and may further include a fiber other than the fiber of the first embodiment. For example, the fiber of the second embodiment may include a fiber obtained by preparing a protein fiber containing a protein other than the above-described hydrophobic protein (such as a hydrophilic protein) and coating the surface thereof with a component that hardly dissolves in water.

As used herein, the "initial tensile modulus of elasticity" refers to the Young's modulus measured by subjecting a fiber having a fiber length of 300 mm to a tensile test under conditions of a tensile speed of 300 mm/min.

As used herein, the "wet (fiber)" refers to a fiber that has been immersed in water for 15 minutes and sufficiently moistened. On the other hand, as used herein, the "dry (fiber)" refers to a fiber that has not been subjected to a special treatment such as dipping.

The tensile test can be performed, for example, using Instron 3345 manufactured by Instron. Further, the initial tensile modulus of elasticity can be, for example, calculated by analyzing the data obtained by the Instron 3345 with analysis software such as "Instron Bluehill Le".

The fiber of the second embodiment preferably has an initial tensile modulus of elasticity of 3.0 GPa or more and more preferably has an initial tensile modulus of elasticity of 4.0 GPa or more when wet. Further, the fiber of the second embodiment may have an initial tensile modulus of elasticity of, for example, 12.0 GPa or less when wet

The fiber of the second embodiment preferably has a rupture strength of 50 MPa or more when wet. In this case, the strength of a rubber article can be reinforced more effectively. Further, the fiber of the second embodiment may have a rupture strength of, for example, 350 MPa or less when wet.

The fiber of the second embodiment preferably has a rupture strength of 100 MPa or more when dry. In this case, the strength of a rubber article can be reinforced more effectively. Further, the fiber of the second embodiment may have a rupture strength of, for example, 700 MPa or less when dry.

As used herein, the "rupture strength" refers to the strength of a fiber with a fiber length of 300 mm when it is subjected to a tensile test under conditions of a tensile speed of 300 mm/min and the tensile strength is reduced by 15 %.

The tensile test can be carried out, for example, using Instron 3345 manufactured by Instron.

The initial tensile modulus of elasticity and rupture strength of the fiber when dry/wet can be adjusted by, for example, appropriately selecting the type of the solvent used in the dope solution during spinning, and adjusting the draw ratio during spinning.

A method of producing the fiber of the second embodiment is the same as that described above for the fiber of the first embodiment.

The following describes matters common to the fiber of the first embodiment and the fiber of the second embodiment (hereinafter, may be simply collectively referred to as "fiber").

The fiber is not particularly limited, and it may be a short fiber; a non-woven fabric; a cord woven fabric; a film; and a cord such as a canvas monofilament cord, or a twisted cord obtained by twisting one or a plurality of multifilaments. Especially when reinforcing a rubber article such as a tire and a conveyor belt, the fiber is preferably a cord and more preferably a twisted cord obtained by twisting a plurality of filaments. The total fineness of the fiber is not particularly limited, but it is preferably 500 dtex to 5,000 dtex.

When the fiber is compounded with a rubber material, the fiber length is preferably more than 6.0 mm, more preferably more than 10 mm, and still more preferably 35 mm or more. This is because, as described above, the fiber of the present embodiment has the effect of reducing the possibility of breaking, especially when wet, and the effect is more pronounced in long fibers than in broken short fibers

Regarding the fiber length, the Fiber Handbook 2nd edition (edited by the Society of Fiber Science and Technology: Maruzen Co., Ltd.; 1994; page 66) classifies a fiber with a length of more than 10 mm as a "long fiber" and a fiber with a length of less than 10 mm as a "short fiber". The present embodiment also classifies fibers by the same criteria as the document. Although a fiber with a length of exactly 10 mm is not mentioned in the document, it is included in the "short fiber" as used herein. Further, the "long fiber" includes a continuous fiber.

The fiber may be provided with a coating layer made of an adhesive composition on the surface so that it can be embedded in a rubber material to obtain a rubber article with increased strength. Further, when forming the coating layer, the surface to be coated of the fiber may be subjected to a pretreatment, for example, by electron beam, microwave, corona discharge, or plasma in advance. The thickness of the coating layer is preferably 0.5 µm to 50 µm and more preferably 1 µm to 10 µm.

From the viewpoint of easily coating, the adhesive composition is preferably dissolved in a solvent to reduce its viscosity and used. Further, the solvent preferably contains water from the viewpoint of lowering the burden on the environment. That is, the adhesive composition is preferably a water-based adhesive composition from the viewpoint of lowering the burden on the environment. As described above, the decrease in fiber strength when the fiber is moistened is significantly suppressed, so that the fiber hardly breaks even when a water-based adhesive composition is used.

As used herein, the "water-based adhesive composition" refers to an adhesive composition in which the proportion of water in the whole is 30 % by mass or more.

The water-based adhesive composition is not particularly limited if it can improve the adhesiveness to a rubber material, and examples thereof include water-based adhesive compositions containing components usually used for bonding rubber and fibers. The water-based adhesive composition particularly preferably contains a rubber latex (component (A)) such as rubber cement. In other words, the water-based adhesive composition preferably contains a rubber component. In this case, the adhesiveness can be more effectively improved.

Examples of the (A) rubber latex (rubber component) include a rubber latex that can be vulcanized with sulfur, and more specific examples include a natural rubber latex and a synthetic rubber latex having unsaturated diene. These rubber latexes may be used alone or in combination of two or more.

The natural rubber latex is not particularly limited, and examples thereof include a field latex, an ammonia-treated latex, a centrifugally separated and concentrated latex, a deproteinized latex that has been treated with detergent and/or enzyme, and modified ones thereof.

The synthetic rubber latex having unsaturated diene is not particularly limited, and examples thereof include a styrene-butadiene copolymer rubber latex, a vinylpyridine-styrene-butadiene copolymer rubber latex, a carboxyl group-modified styrene-butadiene copolymer rubber latex, a nitrile rubber latex, and a chloroprene rubber latex. These synthetic rubber latexes may be used alone or in combination of two or more.

The content (solid content concentration) of the (A) rubber latex in the total solid content in the water-based adhesive composition is preferably 25 % by mass or more. In this case, there are sufficient rubber components of the rubber latex contained in the adhesive composition that interacts with a rubber composition for topping (rubber material used for compounding) and leads to vulcanization, the rubber components are adhered to each other by co-vulcanization, and the adhesion state of the coated rubber in a composite of the fiber for rubber reinforcement and the rubber material can be improved. From the same viewpoint, the content (solid content concentration) of the (A) rubber latex in the total solid content in the water-based adhesive composition is more preferably 30 % by mass or more.

The water-based adhesive composition preferably further contains (B) resorcin and (C) formaldehyde in addition to the (A) rubber latex. In this case, the adhesiveness can be further effectively improved. The water-based adhesive composition is not particularly limited, and a conventionally known and used resorcin-formaldehyde-latex mixture (RFL composition) can be used.

When the water-based adhesive composition contains the (A) rubber latex, (B) resorcin and (C) formaldehyde, the content (solid content concentration) of the (A) rubber latex in the total solid content in the water-based adhesive composition is preferably 25 % by mass or more and is preferably 80 % by mass or less. When the content is 25 % by mass or more, there are sufficient rubber components of the rubber latex contained in the adhesive composition that interacts with a rubber composition for topping (rubber material used for compounding) and leads to vulcanization, the rubber components are adhered to each other by co-vulcanization, and the adhesion state of the coated rubber in a composite of the fiber for rubber reinforcement and the rubber material can be improved. Further, when the content is 80 % by mass or less, a certain amount or more of the (B) resorcin and (C) formaldehyde can be relatively secured, so that the cohesive fracture resistance of the coating layer made of the adhesive composition is sufficiently secured, and fracture hardly occurs in the coating layer. As a result, sufficient adhesiveness can be obtained. From the same viewpoint, the content (solid content concentration) of the (A) rubber latex in the total solid content in the water-based adhesive composition is more preferably 30 % by mass or more and still more preferably 40 % by mass or more.
Further, it is more preferably 70 % by mass or less and still more preferably 65 % by mass or less.

When the water-based adhesive composition contains the (A) rubber latex, (B) resorcin and (C) formaldehyde, a molar ratio of the (C) formaldehyde to the (B) resorcin ((C) formaldehyde/(B) resorcin) is preferably in a range of 0.8 to 1.5. In this case, the condensation polymerization of the (B) resorcin is appropriately caused by the (C) formaldehyde, and the cohesive fracture resistance of the coating layer made of the adhesive composition can be further improved.

Alternatively, the water-based adhesive composition preferably contains no (B) resorcin from the viewpoint of lowering the burden on the environment.

The water-based adhesive composition may further contain at least one component selected from the group consisting of (D) an aqueous compound having a (blocked) isocyanate group, (E) an epoxy compound, and (F) an amine compound, in addition to the (A) rubber latex. The water-based adhesive composition is not particularly limited, and examples thereof include the adhesive composition described in WO/2010/125992.

The "(blocked) isocyanate group" of the (D) aqueous compound having a (blocked) isocyanate group means a blocked isocyanate group or an isocyanate group, which includes
(i) a blocked isocyanate group obtained by a reaction of an isocyanate group with a blocking agent for the isocyanate group,
(ii) an isocyanate group where the isocyanate group has not reacted with a blocking agent for the isocyanate group,
(iii) an isocyanate group obtained by dissociating a blocking agent from a blocked isocyanate group, and
(iv) an isocyanate group.

The "aqueous" of the (D) aqueous compound having a (blocked) isocyanate group means that the (D) aqueous compound is water-soluble or water-dispersible, where the "water-soluble" does not necessarily mean it is completely water-soluble, but also means that it is partially water-soluble or that phase separation does not occur in an aqueous solution of the adhesive composition.

The blocking agent is not particularly limited if it is a blocking agent compound where it is possible to dissociate the blocking agent and restore an isocyanate group by performing heat treatment as necessary while protecting the isocyanate group from an arbitrary chemical reaction. Examples of such a blocking agent include alcohol, phenol, active methylene, oxime, lactam, and amine, which are not particularly limited. Specific examples thereof include lactams such as ε-caprolactam, δ-valerolactam, and γ-butyrolactam; phenols such as phenol, cresol, ethylphenol, butylphenol, octylphenol, nonylphenol, dinonylphenol, thiophenol, chlorphenol, and amylphenol; oximes such as methylethylketoxime, acetone oxime, acetophenone oxime, benzophenone oxime, and cyclohexanone oxime; alcohols such as methanol, ethanol, butanol, isopropyl alcohol, butyl alcohol, and cyclohexanol; malonic acid dialkyl esters such as dimethyl malonate and diethyl malonate; active methylenes such as methyl acetoacetate, ethyl acetoacetate, and acetylacetone, and mercaptans such as butyl mercaptan and dodecyl mercaptan; amides such as acetanilide and acetate amide; imides such as succinimide, phthalic acid imide, and maleic acid imide; sulfites such as sodium bisulfite; cellosolves such as methyl cellosolve, ethyl cellosolve, and butyl cellosolve; pyrazoles such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; amines such as dimethylamine, diethylamine, di-n-propylamine, diisopropylamine, dicyclohexylamine, diphenylamine, xylidine, N,N-diethylhydroxyamine, N,N'-diphenylformamidine, 2-hydroxypyridine, 3-hydroxypyridine, and 2-mercaptopyridine; and triazoles such as 1,2,4-triazole. The blocking agent may be used alone or in combination of two or more.

The blocking agent is particularly preferably phenol, ε-caprolactam and ketoxime, which can easily and stably cause the heat curing of the adhesive composition through thermal dissociation by heating.

The (D) aqueous compound having a (blocked) isocyanate group is preferably (D-1) a water-dispersible (blocked) isocyanate compound which is an addition product of a polyisocyanate having an aromatic ring and a blocking agent having one or more active hydrogen groups. For the "(D-1) water-dispersible (blocked) isocyanate compound which is an addition product of a polyisocyanate having an aromatic ring and a blocking agent having one or more active hydrogen groups", the "active hydrogen group" refers to a group containing hydrogen that serves as active hydrogen (atomic hydrogen (hydrogen radical) and hydride ion (hydride)) when placed under suitable conditions. Examples of the active hydrogen group include an amino group and a hydroxyl group.

Specifically, the "(D-1) water-dispersible (blocked) isocyanate compound which is an addition product of a polyisocyanate having an aromatic ring and a blocking agent having one or more active hydrogen groups" includes aromatic polyisocyanates or aromatic aliphatic polyisocyanates. Examples of the aromatic polyisocyanates include phenylene diisocyanates such as m-phenylene diisocyanate and p-phenylene diisocyanate; tolylene diisocyanates such as 2,4-tolylene diisocyanate and 2,6-tolylene diisocyanate (TDI); diphenylmethane diisocyanates such as 2,4'-diphenylmethane diisocyanate, 4,4'-diphenylmethane diisocyanate (MDI), dialkyl diphenylmethane diisocyanate, and tetraalkyl diphenylmethane diisocyanate; polymethylene polyphenyl polyisocyanate (polymeric MDI); mor p-isocyanatophenylsulfonyl isocyanates; diisocyanatobiphenyls such as 4,4'-diisocyanatobiphenyl and 3,3'-dimethyl-4,4'-diisocyanatobiphenyl; and naphthalene diisocyanates such as 1,5-naphthylene diisocyanate. Examples of the aromatic aliphatic polyisocyanates include xylylene diisocyanates such as m-xylylene diisocyanate, p-xylylene diisocyanate (XDI), and tetramethylxylylene diisocyanate; diethylbenzene diisocyanate; and α,α,α,α-tetramethylxylylene diisocyanate (TMXDI). Examples further include modified products such as carbodiimide, polyol and allophanate of the polyisocyanate.

Among these polyisocyanates containing an aromatic ring in the molecule, aromatic polyisocyanates are preferable, tolylene diisocyanate (TDI), diphenylmethane diisocyanate (MDI) or polymethylene polyphenyl polyisocyanate (polymeric MDI) is more preferable, and diphenylmethane diisocyanate (MDI) is particularly preferable from the viewpoint of the cord focusing properties of the adhesive composition.

The (D) aqueous compound having a (blocked) isocyanate group is more preferably (D-2) an aqueous urethane compound having a (blocked) isocyanate group.

Examples of commercially available products of the (D-2) aqueous urethane compound having a (blocked) isocyanate group include DM-6400 manufactured by MEISEI CHEMICAL WORKS, LTD., ELASTRON BN69 manufactured by DKS Co. Ltd., and GRILBOND IL-6 manufactured by EMS. Further, the (D-2) aqueous urethane compound having a (blocked) isocyanate group may also be ELASTRON BN27, BN77, BN11 manufactured by DKS Co. Ltd. and the like.

The (D-2) aqueous urethane compound having a (blocked) isocyanate group can be obtained, for example, by reacting (α) an organic polyisocyanate compound having a molecular structure in which aromatics are bonded by an alkylene chain, (β) a compound having a plurality of active hydrogens, and (γ) a thermally dissociable blocking agent for an isocyanate group. The bond of the alkylene chain in the (α)organic polyisocyanate compound is preferably a methylene bond.

The (D-2) aqueous urethane compound having a (blocked) isocyanate group can be produced with a known method, such as the method described in JPS6351474B.

The content (solid content concentration) of the (D) aqueous compound having a (blocked) isocyanate group in the total solid content in the water-based adhesive composition is preferably 5 % by mass or more when compounded. Further, the content is preferably 75 % by mass or less. When the content is 5 % by mass or more, the adhesiveness during compounding of the fiber and a rubber material can be further improved. Further, when the content is 75 % by mass or less, a certain amount or more of the (A) rubber latex can be relatively secured, so that the adhesiveness during compounding of the fiber and a rubber material can be well maintained. From the same viewpoint, the content (solid content concentration) of the (D) aqueous compound having a (blocked) isocyanate group in the total solid content in the water-based adhesive composition is more preferably 10 % by mass or more and still more preferably 20 % by mass or more. Further, the content is preferably 75 % by mass or less, more preferably 60 % by mass or less, and still more preferably 50 % by mass or less.

The (E) epoxy compound refers to a compound having oxacyclopropane (oxirane) (epoxy group), which is a 3-membered ring ether, in its structural formula.

The (E) epoxy compound is preferably a compound containing two or more epoxy groups in one molecule. In this case, the polyfunctionalization further improves the breaking resistance of the coating layer made of the adhesive composition and also improves the adhesiveness at high temperatures. From the same viewpoint, the (E) epoxy compound is more preferably a compound containing four or more epoxy groups in one molecule.

Specific examples of the (E) epoxy compound include reaction products of epichlorohydrin and polyhydric alcohols such as diethylene glycol/diglycidyl ether, polyethylene/diglycidyl ether, polypropylene glycol/diglycidyl ether, neopentyl glycol/diglycidyl ether, 1,6-hexanediol/diglycidyl ether, glycerol/polyglycidyl ether, trimethylolpropane/polyglycidyl ether, polyglycerol/polyglycidyl ether, pentaerythiol/polyglycidyl ether, diglycerol/polyglycidyl ether, and sorbitol/polyglycidyl ether; novolac-type epoxy resins such as phenol novolac-type epoxy resin and cresol novolac-type epoxy resin; and bisphenol A-type epoxy resins. The (E) epoxy compound is preferably a reaction product of epichlorohydrin and polyhydric alcohols, or a novolac-type epoxy resin.

The sorbitol/polyglycidyl ether, polyglycerol/polyglycidyl ether, novolac-type epoxy resin and the like may be commercially available products.

The content (solid content concentration) of the (E) epoxy compound in the total solid content in the water-based adhesive composition is preferably 0.3 % by mass or more when compounded. Further, the content is preferably 45 % by mass or less. When the content is 0.3 % by mass or more, the adhesiveness can be further improved. Further, when the content is 45 % by mass or less, a certain amount or more of the (A) rubber latex and other components can be relatively secured, so that the adhesiveness during compounding of the fiber and a rubber material can be well maintained. From the same viewpoint, the content (solid content concentration) of the (E) epoxy compound in the total solid content in the water-based adhesive composition is more preferably 0.5 % by mass or more. Further, the content is more preferably 40 % by mass or less.

The (F) amine compound may be, for example, amines known as an amine-based curing agent, and examples thereof include aliphatic amines, alicyclic amines, aromatic amines, heterocyclic amines, and Mannich bases. Among the above, it is preferable to use a heterocyclic amine as the (F) amine compound.

Examples of the heterocyclic amine include piperazine, 1-aminoethylpiperazine, 1,4-diaminoethylpiperazine, 3-aminopyrrolidine, 2-(2-aminoethyl) pyrrolidine, 4,4'-bipiperazine, 4,4'-ethylenedipiperidine, 4,4'-trimethylene dipiperidine, 4-(aminomethyl) piperidine, and 3-(4-aminobutyl) piperidine.

The content (solid content concentration) of the (F) amine compound in the total solid content in the water-based adhesive composition is preferably 0.2 % by mass or more and 10 % by mass or less when compounded. When the content is 0.2 % by mass or more, the (F) amine compound can be used as a curing agent for the (D) aqueous compound having a (blocked) isocyanate group and/or the (E) epoxy compound, which can further strengthen the curing. Further, when the content is 10 % by mass or less, it is possible to effectively suppress the embrittlement of the water-based adhesive composition and thus suppress a decrease in the adhesiveness.

When the water-based adhesive composition contains the (A) rubber latex, it preferably contains no sulfur (elemental sulfur). This is because when sulfur is used, sulfur powder may precipitate in the (A) rubber latex, or it may be difficult for the rubber component in a rubber material for topping to interact with the rubber component in the adhesive composition when rubber particles of the (A) rubber latex turn to vulcanized rubber by heating or drying with sulfur.

The coating layer made of the adhesive composition can be formed, for example, by dipping, brushing, casting, spraying, roll coating, and knife coating. The following describes dipping as an example.

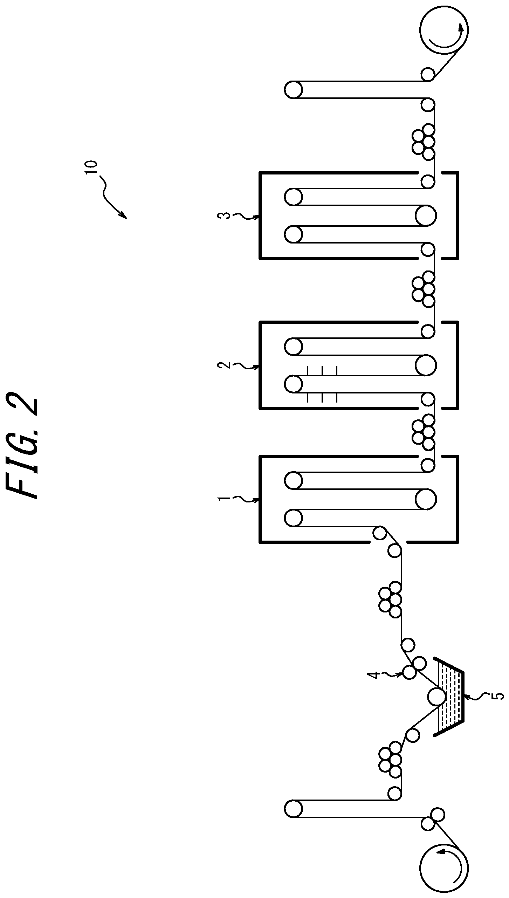

FIG. 2 illustrates an outline of an example device for forming a coating layer made of an adhesive composition on a fiber (cord) surface with a dipping method. In the device 10 illustrated in FIG. 2, a cord is unwound, the tension per cord is adjusted to 0.20 kg to 1.2 kg, and the cord is immersed in an adhesive composition (liquid) in the liquid tank 5. Next, the amount of the adhesive composition attached to the cord is adjusted by the drawing pressure between rolls by the drawing roll 4, then the cord is dried in the drying zone 1 at, for example, 110 °C to 140 °C and preferably 110 °C to 120 °C, and then the cord is subjected to heat treatment in the hot zone 2 and the normalize zone 3 at, for example, 130 °C to 170 °C and preferably 130 °C to 150 °C. Next, it may be appropriately cooled. When the tension of the cord exceeds 1.2 kg, the strength of the cord may be lowered, and when the tension is less than 0.20 kg, the traveling cord may be loosened and derailment from the cord path may frequently occur. It should be noted that the lower the cord tension during dipping is, the smaller the deformation in the tension direction of the special protein fiber in contact with water is. Therefore, the tension of the cord is preferably 0.20 kg to 0.30 kg.

To reinforce a resulting rubber article, the fiber can be composited with a rubber material (topping) by being embedded in the rubber material or the like and can be vulcanized and integrated with the rubber material with a conventional method. Rubber components contained in the rubber material are not particularly limited, and examples thereof include conjugate diene-based rubber such as natural rubber (NR), polyisoprene rubber (IR), polybutadiene rubber (BR), styrene-butadiene rubber (SBR), acrylonitrile butadiene rubber (NBR), chloroprene rubber (CR) and butyl rubber (IIR), and ethylene-propylene copolymer rubber (EPM), ethylene-propylene-diene copolymer rubber (EPDM), and polysiloxane rubber. Among the above, conjugated diene-based synthetic rubber is preferable. These rubber components may be used alone or in combination of two or more.

Various compounding agents that are usually used in the rubber industry, such as a filler like carbon black, silica and aluminum hydroxide; a vulcanizing agent; a vulcanization accelerator; an age resistor; and a softener, may be appropriately added to the rubber components.

Examples of the vulcanizing agent include inorganic sulfides such as sulfur, thiuram polysulfide compounds such as tetramethylthiuram disulfide and dipentamethylene thiuram tetrasulfide, and organic vulcanizing agents such as 4,4-dithiomorpholine, p-quinone dioxime, p,p'-dibenzoquinone dioxime, and cyclic sulfur imide. Among the above, it is preferable to use sulfur as the vulcanizing agent.

When the fiber is provided with a coating layer made of an adhesive composition on the surface and they are vulcanized together with the rubber material, the vulcanizing agent contained in the rubber material is transferred to the adhesive composition and the adhesive composition is cross-linked by the vulcanizing agent, which provides better adhesiveness.

### (Rubber article)

A rubber article of one embodiment of the present disclosure includes the fiber for rubber reinforcement described above. Since the rubber article includes the fiber for rubber reinforcement, it has high strength. The rubber article is not particularly limited except that it includes the fiber for rubber reinforcement. The rubber article is not particularly limited, and examples thereof include a tire, a conveyor belt, a belt, a hose, an air spring, a rubber crawler, a seismic isolation rubber, and a vibration-insulating rubber.

### (Cord for tires and tire)

A cord for tires of one embodiment of the present disclosure includes the fiber for rubber reinforcement described above. Since the cord for tires includes the fiber for rubber reinforcement, it has high strength. The cord for tires may be the fiber for rubber reinforcement.

Further, a tire of one embodiment of the present disclosure includes the cord for tires described above. Since the tire includes the cord for tires, it has high strength. The tire is not particularly limited except that any member is provided with the cord for tires. Further, a method for manufacturing the tire is not particularly limited, and the tire can be manufactured using a known tire manufacturing method.

### EXAMPLES

The following describes the present disclosure in more detail with reference to examples, but the present disclosure is not limited to the following examples and can be changed as appropriate without departing from the scope of the disclosure.

### (1-1) Synthesis of nucleic acid encoding hydrophobic protein and construction of expression vector

A nucleic acid encoding a protein having the designed amino acid sequence set forth in SEQ ID NO: 17 was synthesized. NdeI sites were added to the nucleic acid at the 5' end, and EcoRI sites were added downstream of the stop codon. These five types of nucleic acids were cloned into a cloning vector (pUC118). Next, the nucleic acid was cut out by restriction enzyme treatment with NdeI and EcoRI and then recombined with the protein expression vector pET-22b (+) to obtain an expression vector.

### (1-2) Expression of hydrophobic protein

Escherichia coli BLR (DE3) was transformed with the pET22b (+) expression vector containing the nucleic acid encoding the protein having the amino acid sequence set forth in SEQ ID NO: 17. The transformed Escherichia coli was cultured in 2 mL of LB medium containing ampicillin for 15 hours. The culture solution was added to 100 mL of seed culture medium (listed in Table 4) containing ampicillin so that the OD600 was 0.005. The culture solution temperature was kept at 30 °C, and flask culture was carried out until the OD600 reached 5 (about 15 hours) to obtain a seed culture solution.

**Table 4**

| Seed culture medium (per 1 L at the start of culture) | |
|---|---|
| Glucose | 5g |
| KH₂PO₄ | 4g |
| K₂HPO₄ | 10g |
| Yeast Extract | 6g |

Ampicillin was added to a final concentration of 100 mg/L to obtain a seed culture medium.

The seed culture solution was added to ajar fermenter to which 500 mL of a production medium (listed in Table 5) had been added so that the OD600 was 0.05, and the transformed Escherichia coli was inoculated. The temperature of the culture solution was kept at 37 °C, and the culture was controlled at a constant pH of 6.9. Further, the dissolved oxygen concentration in the culture solution was maintained at 20 % of the dissolved oxygen saturation concentration.

**Table 5**

| Production medium (per 1 L at the start of culture) | |
|---|---|
| Glucose | 12g |
| KH₂PO₄ | 9g |
| MgSO₄·7H₂O | 2.4g |
| Yeast Extract | 15g |
| FeSO₄·7H₂O | 40mg |
| MnSo₄·5H₂O | 40mg |
| CaCl₂·2H₂O | 40mg |
| GD-113 (antifoaming agent) | 0.1mL |

Immediately after the glucose in the production medium was completely consumed, a feed solution (glucose 455 g/1 L, yeast extract 120 g/1 L) was added at a rate of 1 mL/min. The temperature of the culture solution was kept at 37 °C, and the culture was controlled at a constant pH of 6.9. Further, the dissolved oxygen concentration in the culture solution was maintained at 20 % of the dissolved oxygen saturation concentration, and the culture was carried out for 20 hours. Next, 1 M of isopropyl-β-thiogalactopyranoside (IPTG) was added to the culture solution to a final concentration of 1 mM to induce the expression of the target protein.
Twenty hours after the addition of IPTG, the culture solution was centrifuged and the bacterial cells were collected. SDS-PAGE was carried out using bacterial cells prepared from the culture medium before and after the addition of IPTG, and the expression of the target protein (PRT918) was confirmed by the appearance of a band of the target protein size depending on the addition of IPTG.

It was confirmed that the expressed protein (modified protein) was a hydrophobic protein, where a value (average HI) obtained by dividing the sum of the hydrophobicity indexes of all the constituent amino acid residues by the total number of amino acid residues was 0.45.

### (1-3) Purification of hydrophobic protein

Bacterial cells collected 2 hours after the addition of IPTG were washed with 20 mM Tris-HCl buffer (pH 7.4). The washed cells were suspended in 20 mM Tris-HCl buffer (pH 7.4) containing about 1 mM PMSF, and the cells were disrupted with a high-pressure homogenizer (GEA Niro Soavi). The crushed cells were centrifuged to obtain a precipitate. The resulting precipitate was washed with 20 mM Tris-HCl buffer (pH 7.4) until high purity was obtained. The washed precipitate was suspended in 8M guanidine buffer (8M guanidine hydrochloride, 10 mM sodium dihydrogen phosphate, 20 mM NaCl, 1 mM Tris-HCl, pH 7.0) to a concentration of 100 mg/mL, and the mixture was stirred with a stirrer at 60 °C for 30 minutes to dissolve. After dissolution, dialysis was carried out with water using a dialysis tube (cellulose tube 36/32 manufactured by Sanko Junyaku Co., Ltd.). The white aggregated protein obtained after dialysis was recovered by centrifugation, water was removed by a freeze-dryer, and the freeze-dried powder was recovered.

The degree of purification of the target protein in the obtained freeze-dried powder was confirmed by image analysis of the results of polyacrylamide gel electrophoresis of the powder using Totallab (nonlinear dynamics ltd.). As a result, the degree of purification was about 85 %.

### (1-4) Preparation of undiluted spinning solution (dope solution)

DMSO in which lithium chloride had been dissolved to 4 % by mass was used as a solvent. The freeze-dried powder of the hydrophobic protein of PRT918 (SEQ ID NO: 17) prepared above was added to the solvent so as to have a content of 24 % by mass. Next, after melting with an aluminum block heater at 90 °C for one hour, insoluble substance and bubbles were removed to obtain an undiluted spinning solution (dope solution).

### (1-5) Spinning (preparation of protein fiber)

The undiluted spinning solution was filled in a reserve tank and discharged from a mono-hole nozzle with a diameter of 0.1 mm or 0.2 mm into a 100 % by mass methanol solidification bath using a gear pump. The discharge rate was adjusted to 0.01 mL/min to 0.08 mL/min. After solidification, washing and drawing were carried out in a 100 % by mass methanol washing bath. After washing and drawing, it was dried using a dry heat plate, and the obtained raw yarn (protein fiber) was wound up.

### (2) Preparation of protein fiber containing hydrophilic protein

A nucleic acid encoding a protein having the amino acid sequence set forth in SEQ ID NO: 4 was synthesized, and a protein (PRT799) was expressed according to a method substantially similar to the above except that the nucleic acid was used. It was confirmed that the expressed protein (modified protein) was not a hydrophobic protein (it was a hydrophilic protein), where a value (average HI) obtained by dividing the sum of the hydrophobicity indexes of all the constituent amino acid residues by the total number of amino acid residues was -0.8.

The modified protein was purified and spun according to the same method as described above to obtain a raw yarn (protein fiber).

### (3) Preparation of twisted cord

A protein fiber containing the above-described hydrophobic protein was used in Example 1, a protein fiber containing the hydrophilic protein was used in Comparative Examples 1 and 2, and a cord (twisted cord) twisted at 2000 dtex/2 where the upper twist number was 42 times/10 cm and the lower twist number was 42 times/10 cm was obtained in each example.

### (4) Preparation of water-based adhesive composition

A rubber latex (NR latex) containing natural rubber was obtained by mixing 500 parts by mass of water and 500 parts by mass of a natural rubber latex (field latex) having a solid content concentration of 20 % by mass. The NR latex was used as a water-based adhesive composition in Example 1 and Comparative Example 2.

A rubber latex (Vp latex) containing vinylpyridine-styrene-butadiene copolymer rubber was obtained by mixing 756 parts by mass of water and 244 parts by mass of a vinylpyridine-styrene-butadiene copolymer rubber latex ("PYLATEX" manufactured by Sumitomo A&L Co., Ltd.) having a solid content concentration of 41 % by mass. The Vp latex was used as a water-based adhesive composition in Example 2 and Comparative Example 3.

A mixture was obtained by mixing 588.29 parts by mass of water, 16.61 parts by mass of resorcin (manufactured by Tokyo Chemical Industry Co., Ltd.), 20.80 parts by mass of formalin ("Formaldehyde Solution (37 %)" manufactured by Tokyo Chemical Industry Co., Ltd.), and 3.79 parts by mass of caustic soda (10 %), and then the mixture was aged at room temperature for 7 hours to obtain an aged solution containing resorcin and formaldehyde. Next, 370.51 parts by mass of a vinylpyridine-styrene-butadiene copolymer rubber latex ("PYLATEX" manufactured by Sumitomo A&L Co., Ltd.) was added to 629.49 parts by mass of the aged solution, and then the mixture was aged at room temperature for 16 hours to obtain a RFL composition (resorcin-formaldehyde-latex mixture). The RFL composition was used as a water-based adhesive composition in Example 3 and Comparative Example 4.

A latex-containing composition was obtained by mixing 462.39 parts by mass of water, 242.17 parts by mass of a compound having a (blocked) isocyanate group ("ELASTRON BN27" manufactured by DKS Co. Ltd., a heat-reactive aqueous urethane resin having a solid content concentration of 30 % and a molecular structure of methylene diphenyl), 8.55 parts by mass of an epoxy compound ("DENACOL EX614B" manufactured by Nagase ChemteX Corporation, sorbitol/polyglycidyl ether), 1.99 parts by mass of an amine compound (piperazine (anhydride) manufactured by Tokyo Chemical Industry Co., Ltd.), and 284.90 parts by mass of vinylpyridine-styrene-butadiene copolymer rubber latex ("PYLATEX" manufactured by Sumitomo A&L Co., Ltd.) in the stated order. The latex-containing composition had a composition according to Example 5 of WO/2010/125992 and does not contain resorcin. The latex-containing composition was used as a water-based adhesive composition in Example 4 and Comparative Example 5.

### (5) Formation of coating layer on protein fiber

The device 10 illustrated in FIG. 2 was used. The twisted cord prepared in the above (3) was applied with a tension (cord tension) of 0.25 kg/piece and immersed in an adhesive solution stored in the liquid tank 5. The adhesive solution may be appropriately selected from the water-based adhesive compositions obtained in the above (4). Next, the twisted cord with the adhesive solution attached was dried in the drying zone 1 (130 °C, 120 seconds) while being applied with a tension (cord tension) of 0.6 kg/piece. Next, it was subjected to heat treatment in the hot zone 2 (150 °C, 40 seconds) and the normalize zone 3 (140 °C, 40 seconds). In this way, a coating layer made of a water-based adhesive composition was formed on the surface of the twisted cord.

### (6) Production of fiber-reinforced rubber

The obtained twisted cord was embedded in an unvulcanized rubber composition (unvulcanized) containing rubber components containing natural rubber and styrene-butadiene rubber, carbon black, and a cross-linking agent, and vulcanization was performed at 160 °C for 20 minutes to obtain a fiber-reinforced rubber.

The following measurements and the like were carried out with the above operation.

### (7) Measurement of initial tensile modulus of elasticity and rupture strength of protein fiber (before formation of coating layer) when dry/wet

The obtained protein fiber was subjected to a tensile test using Instron 3345 manufactured by Instron under the conditions of a fiber length of 300 mm and a tensile speed of 300 mm/min in an environment of a temperature of 20 °C and a humidity of 65 %. The data obtained in this tensile test was analyzed with the analysis software "Instron Bluehill Le" to calculate the Young's modulus, and the "initial tensile modulus of elasticity when dry" was obtained.

Further, after immersing the obtained protein fiber in water for 15 minutes so that the fiber was sufficiently moistened, the Young's modulus of the fiber was calculated in the same manner as above to obtain the "initial tensile modulus of elasticity when wet". Moreover, when the moistened fiber was subjected to the same tensile test as above, the strength when the tensile strength decreased by 15 % was measured as the "rupture strength when wet". The results are listed in Table 7.

### (8) Evaluation of cord breakage of protein fiber

During the immersion of the twisted cord in the above (5), the presence or absence of cord breakage when the 100 m of twisted cord was immersed was visually confirmed, and the cord breakability was evaluated according to the following criteria. The results are listed in Table 7.
Good: no cord breakage occurred
Poor: cord breakage occurred

### (9) Evaluation of adhesiveness and rubber adhesion

The cord was dug up from the finally obtained fiber-reinforced rubber (vulcanized product), and the cord was peeled off from the vulcanized product by pulling the cord at a speed of 300 mm/min, and the peeling resistance per cord was determined as the adhesiveness (N/piece). Further, the rubber adhesion state and the presence or absence of breakage of the cord after peeling was observed and ranked according to the criteria listed in Table 6. The results are listed in Table 7.

**Table 6**

| Rubber adhesion ranking | Area ratio of coated rubber to cord surface area | Presence of cord breakage |
|---|---|---|
| A+ | - | Yes |
| A | 100 to 80% | No |
| B | 80 to 60% | No |
| C | 60 to 40% | No |
| D | 40 to 20% | No |
| E | 20 to 0% | No |

**Table 7**

| | Comparative Example 1 | Comparative Example 2 | Comparative Example 3 | Comparative Example 4 | Comparative Example 5 | Example 1 | Example 2 | Example 3 | Example 4 |
|---|---|---|---|---|---|---|---|---|---|
| Protein type | Hydrophilic protein | | | | | Hydrophobic protein | | | |
| Initial tensile modulus of elasticity when dry [GPa] | 3.6 | | | | | 4.7 | | | |
| Initial tensile modulus of elasticity when wet [GPa] | 0.11 | | | | | 4.5 | | | |
| Rupture strength when wet [MPa] | 44 | | | | | 83 | | | |
| With adhesive coating treatment | No | Yes | Yes | Yes | Yes | Yes | Yes | Yes | Yes |

| Water-based adhesive composition | - | NR latex | Vp latex | RFL composition | Latex - containing composition | NR latex | Vp latex | RFL composition | Latex - containing composition |
|---|---|---|---|---|---|---|---|---|---|
| Cord breakage | Not evaluated | Poor | Poor | Poor | Poor | Good | Good | Good | Good |
| Adhesiveness [N/piece] | 2.6 | ^{∗}1 | ^{∗}1 | ^{∗}1 | ^{∗}1 | 8.5 | 10.1 | 27.2 | 26.9 |
| Rubber adhesion ranking | E | ^{∗}1 | ^{∗}1 | ^{∗}1 | ^{∗}1 | D | C | A+ | A+ |
| ^{∗}1 The cord broke during the adhesive coating treatment, and it was not in a cord shape due to subsequent shrinkage deformation. | | | | | | | | | |

According to Table 7, it is understood that, because the fibers of Examples 1 to 4 contained a hydrophobic protein and had an initial tensile modulus of elasticity of 2.0 GPa or more when wet, they hardly broke even if they were compounded with a rubber material, especially when they were subjected to an operation requiring contact with a water-based component. Further, according to Table 7, it is understood that the fibers of Examples 1 to 4 maintained high fiber strength and exhibited high adhesiveness to a rubber material even when a coating layer made of a water-based adhesive composition was formed.

### INDUSTRIAL APPLICABILITY

According to the present disclosure, it is possible to provide a fiber for rubber reinforcement that can be produced using a bio-derived raw material and hardly breaks even when compounded with a rubber material. Further, according to the present disclosure, it is possible to provide a rubber article, a cord for tires, and a tire with high strength using the fiber for rubber reinforcement.

### REFERENCE SIGNS LIST

- 10: device
- 1: drying zone
- 2: hot zone
- 3: normalize zone
- 4: drawing roll
- 5: liquid tank

## Claims

1. A fiber for rubber reinforcement, using a protein fiber containing a hydrophobic protein.

2. The fiber for rubber reinforcement according to claim 1,
wherein the hydrophobic protein has a value of average HI of 0 or more, and the value is obtained by dividing the sum of hydrophobicity indexes, expressed as HI, of all the constituent amino acid residues by the total number of amino acid residues.

3. A fiber for rubber reinforcement, using a protein fiber having an initial tensile modulus of elasticity of 2.0 GPa or more when wet.

4. The fiber for rubber reinforcement according to any one of claims 1 to 3, comprising a coating layer made of a water-based adhesive composition on a surface.

5. The fiber for rubber reinforcement according to claim 4,
wherein the water-based adhesive composition contains (A) a rubber latex.

6. The fiber for rubber reinforcement according to claim 5,
wherein the water-based adhesive composition further contains (B) resorcin and (C) formaldehyde.

7. The fiber for rubber reinforcement according to claim 5 or 6, wherein the water-based adhesive composition further contains at least one component selected from the group consisting of
(D) an aqueous compound having a (blocked) isocyanate group,
(E) an epoxy compound, and
(F) an amine compound.

8. The fiber for rubber reinforcement according to claim 7,
wherein the (D) aqueous compound having a (blocked) isocyanate group is (D-1) a water-dispersible (blocked) isocyanate compound which is an addition product of a polyisocyanate having an aromatic ring and a blocking agent having one or more active hydrogen groups.

9. The fiber for rubber reinforcement according to claim 7,
wherein the (D) aqueous compound having a (blocked) isocyanate group is (D-2) an aqueous urethane compound having a (blocked) isocyanate group.

10. The fiber for rubber reinforcement according to claim 7,
wherein the (E) epoxy compound is a compound having two or more epoxy groups in one molecule.

11. The fiber for rubber reinforcement according to claim 7,
wherein the (F) amine compound is a heterocyclic amine.

12. The fiber for rubber reinforcement according to any one of claims 5 to 11, wherein the water-based adhesive composition contains no sulfur.

13. The fiber for rubber reinforcement according to any one of claims 1 to 12, having a fiber length of more than 10 mm.

14. A rubber article, comprising the fiber for rubber reinforcement according to any one of claims 1 to 13.

15. A cord for tires, comprising the fiber for rubber reinforcement according to any one of claims 1 to 13.

16. A tire, comprising the cord for tires according to claim 15.
